Europäisches Patentamt

European Patent Office

Office européen des brevets

(11) Veröffentlichungsnummer: **0 404 087**

**A1**

(12) # EUROPÄISCHE PATENTANMELDUNG

(21) Anmeldenummer: **90111615.2**

(22) Anmeldetag: **20.06.90**

(51) Int. Cl.5: **H01B 1/08, C01G 9/02**

(30) Priorität: **21.06.89 JP 156650/89**

(43) Veröffentlichungstag der Anmeldung:
**27.12.90 Patentblatt 90/52**

(84) Benannte Vertragsstaaten:
**AT BE CH DE DK ES FR GB GR IT LI NL SE**

(71) Anmelder: **METALLGESELLSCHAFT**
**Aktiengesellschaft**
**Reuterweg 14**
**D-6000 Frankfurt am Main(DE)**

Anmelder: **MITSUI MINING & SMELTING CO.,**
**LTD.**
**1-1, 2chome Nihombashi-Muromachi**
**Chuo-ku Tokyo(JP)**

(72) Erfinder: **Hayashi, Takao**
**5-4-5 Sako-cho Hikoshima**
**Shimonoseki-shi Yamagichi-ken(JP)**
Erfinder: **Sato, Norihiro**
**6-7-13, Sako-cho Hikoshima**
**Shimonoseki-shi Yamaguchi-ken(JP)**

Erfinder: **Omotani, Chikara**
**96 Oaza Yamada**
**Shimonoseki-shi Yamaguchi-ken(JP)**
Erfinder: **Hosoi, Manabu**
**194 Kamikomachi**
**Omiya-shi Saitama-ken(JP)**
Erfinder: **Kasahara, Nobuyoshi**
**812-9, Mizuno**
**Sayama-shi Saitama-ken(JP)**
Erfinder: **Rudolph, Günther, Dr.**
**Albert-Schweitzer-Strasse 5**
**D-6451 Neuberg 1(DE)**
Erfinder: **Griebler, Wolf-Dieter, Dr.**
**Zahnstrasse 25**
**D-4130 Moers 1(DE)**
Erfinder: **Hocken, Jörg, Dr.**
**Oberkasseler Strasse 45**
**D-4000 Düsseldorf 11(DE)**

(74) Vertreter: **Rieger, Harald, Dr.**
**Reuterweg 14**
**D-6000 Frankfurt a.M.(DE)**

(54) **Weisses elektrisch leitfähiges Zinkoxed.**

(57) Es wird ein Verfahren zum Erzeugen von weißen, elektrisch leitfähigem Zinkoxid beschrieben, bei dem unter Bildung von Mischfällprodukten eine wäßrige Alkalilösung mit einer Lösung umgesetzt wird, die eine wasserlösliche Zinkverbindung und mindestens eine wasserlösliche Metallverbindung enthält, wobei die wasserlösliche Metallverbindung aus Zinn-, Gallium-, Indium- und Aluminiumverbindungen ausgewählt wird. Die beiden Lösungen werden gleichzeitig derart einer Reaktionszone zugeführt, daß die Reaktionslösung auf einem gewünschten pH-Wert im Bereich von 6 bis 12,5 gehalten wird. Anschließend werden die Mischfällprodukte in einer reduzierend wirkenden Atmosphäre kalziniert.

EP 0 404 087 A1

Fig.1a

Fig.1b

## Weißes elektrisch leitfähiges Zinkoxid

(Technisches Gebiet)

Die Erfindung betrifft ein Verfahren zum Erzeugen von weißem elektrisch leitfähigen Zink oxid mit ausgezeichnetem Weißgrad in hoher Ausbeute. Insbesondere betrifft die Erfindung ein Verfahren zum Erzeugen von elektrisch leitendem Zinkweiß, das für die nachstehend angeführten Verwendungen geeignet ist: als leitendes Überzugsmaterial für die Verwendung bei der Herstellung von elektrostatischem Aufzeichnungspapier und als leitender Füllstoff für antistatische Anstrichstoffe, kautschuke und Harze.

(Stand der Technik)

Zum Erzeugen von weißem elektrisch leitfähigen Zinkoxid sind verschiedene Verfahren bekannt, von denen einige nachstehend angeführt werden. Beispielsweise sind in den japanischen Offenlegungsschriften Sho 58-161923, Sho 58-145620, Sho 55-162477 und Sho 59-97531, in der japanischen Auslegeschrift Sho 55-19897 und in der US-PS 3 538 022 Verfahren angegeben, in denen einem Zinkoxidpulver als Dotierungsstoff ein Oxid mindestens eines Metalls zugesetzt und beigemischt wird, das aus der Gruppe ausgewählt ist, die aus Aluminium, Gallium, Indium, Zinn und dergl. besteht, und dann das Gemisch in einer reduzierend wirkenden Atmosphäre bei einer Temperatur im Bereich von 600 bis 1200 °C kalziniert wird. Es sind auch trockene Verfahren bekannt, beispielsweise jene, in denen ein Gemisch aus einem Zinkoxidpulver und einem Dotierungsstoff in Gegenwart von festem Kohlenstoff erhitzt und dadurch kalziniert wird, ferner nasse Verfahren, wie sie in den japanischen Offenlegungsschriften Sho 62-35970, Sho 61-86421 und Sho 61-40338 angegeben sind und in denen ein Gemisch aus einer Lösung einer wasserlöslichen Zinkverbindung und einer wasserlöslichen Verbindung eines der vorgenannten Metalle unter Bildung von Mischfällprodukten mit einer wäßrigen Lösung eines Alkalihydroxids oder eines Alkalicarbonats oder dergl. gewaschen und getrocknet oder vorerhitzt und danach bei einer Temperatur von 500 bis 1000 °C in einer Stickstoffatmosphäre oder einer reduzierend wirkenden Atmosphäre kalziniert werden.

(Durch die Erfindung zu lösende Probleme)

Ein kalziniertes Produkt mit einer genügenden elektrischen Leitfähigkeit kann jedoch nur in einem trockenen Verfahren erzeugt werden, in dem das Kalzinieren bei erhöhter Temperatur in einer reduzierend wirkenden Atmosphäre durchgeführt wird. Dabei wird aber Zinkoxid durch die Reduktion verflüchtigt, was die Ausbeute des gewünschten Produkts merklich herabsetzt. Ferner wird beim Kalzinieren manchmal ein sekundäres Zusammensintern der Produkte festgestellt.

Dagegen wird in allen üblichen nassen Verfahren zum Erzeugen von elektrisch leitendem Zinkoxid die Neutralisierung chargenweise durchgeführt, wobei insbesondere zu einer wäßrigen Lösung einer wasserlöslichen Zinkverbindung und einer als Dotierungsstoff verwendeten, wasserlöslichen Verbindung eines Metalls allmählich eine wäßrige Lösung eines Alkalihydroxids oder Alkalicarbonats derart zugesetzt wird, daß der End-pH-Wert des Reaktionssystems in dem Bereich liegt, in dem Zink und dergleichen ein Ausfällen bewirken. In einem derartigen Verfahren ist zu Beginn der Neutralisierung ein anderer pH-Wert vorhanden als in der Endphase. Infolgedessen ist es schwierig, ein Mischfällen von zwei oder mehreren Produkten mit verschiedenen Hydrolysegeschwindigkeiten oder Auflösungsgeschwindigkeiten in einem gewünschten Verhältnis zu bewirken und dadurch eine homogene Verteilung des Produkts in der festen Phase zu erzielen. Um ein Endprodukt mit einer gewünschten elektrischen Leitfähigkeit zu erzielen, muß daher das Kalzinieren unbedingt unter reduzierenden Bedingungen bei erhöhter Temperatur durchgeführt werden. Durch ein derartiges Kalzinieren bei erhöhter Temperatur wird jedoch infolge der Verflüchtigung von Zinkoxid die Ausbeute des Produkts herabgesetzt und bewirkt die reduzierend wirkende Atmosphäre, in der das Kalzinieren durchgeführt wird, eine Teilreduktion des gebildeten Metalloxids, so daß sich Metalle in Spuren abscheiden und das erzeugte kalzinierte Produkt einen geringeren Weißgrad hat.

Daher hat die Erfindung die Aufgabe, ein Verfahren zu schaffen, das die Erzeugung von kalzinierten Produkten mit einer gewünschten elektrischen Leitfähigkeit durch ein bei niedriger Temperatur durchgeführtes Kalzinieren ermöglicht.

(Mittel zur Lösung der Probleme)

Zur Lösung der Probleme, die bei den vorgenannten üblichen Verfähren zum Erzeugen von elektrisch leitendem Zinkweiß ungelöst geblieben sind, haben sich die Erfinder für die Anwendung eines nassen Verfahrens entschieden und haben sie verschiedene Untersuchungen mit dem Ziel durchgeführt, das nasse Verfahren zu verbessern. Dabei haben die Erfinder festgestellt, daß die zu kalzinierenden Mischfällprodukte eine homogene Zusammensetzungsverteilung haben müssen, damit ein bei niedrigen Temperaturen durchgeführtes Kalzinieren zu kalzinierten Produkten mit einer in der Praxis brauchbaren elektrischen Leitfähigkeit führt. Die Homogenität dieser Zusammensetzungsverteilung kann durch die Auswertung von Röntgenbeugungsspektren der Mischfällprodukte nachgewiesen werden.

Mischfällprodukte mit einer homogenen Zusammensetzungsverteilung, d. h., Mischfällprodukte, in denen eine als Dotierungsstoff dienende Metallverbindung in der ganzen festen Phase des Zinkoxids homogen verteilt ist, können wie folgt erzeugt werden:

(i) Es wird eine wäßrige Lösung hergestellt, die eine wasserlösliche Zinkverbindung und eine wasserlösliche Verbindung mindestens eines Metalls enthält, das aus der Gruppe ausgewählt ist, die aus Zinn, Aluminium, Gallium und Indium besteht;

(ii) es wird eine wäßrige Alkalilösung hergestellt;

(iii) die beiden Lösungen (i) und (ii) werden gleichzeitig einem Reaktor zugeführt;

(iv) während der Beschickung des Reaktors mit diesen Lösungen wird der pH-Wert der Wasserphase des Reaktionssystems annähernd auf einem gewünschten Wert gehalten, der im Bereich von 6 bis 12,5, vorzugsweise im Bereich von 7 bis 12, liegt.

In diesem Verfahren wird als gleichzeitige Zuführung sowohl die kontinuierliche Zuführung als auch die intermittierende Zuführung der die Zinkverbindung und die Verbindungen der anderen vorstehend angegebenen Metalle enthaltenden Lösung und der wäßrigen Alkalilösung bezeichnet, wobei der pH-Wert der flüssigen Phase des Neutralisierungsreaktionssystems auf einem gewünschten Wert in dem vorherbestimmten Bereich gehalten wird.

Die Menge jedes Bestandteils jeder Lösung ist von der Menge abhängig, in der das entsprechende Oxid in der Zusammensetzung des Oxidprodukts enthalten ist, das nach dem Kalzinieren erhalten wird, und wird so gewählt, daß die Menge mindestens eines Metalloxids, das aus der Gruppe ausgewählt ist, die aus dem Zinnoxid, Galliumoxid, Indiumoxid und Aluminiumoxid besteht, im Bereich von 0,005 bis 5,0 Gewichtsteilen, vorzugsweise 0,005 bis 2,0 Gewichtsteilen, pro 100 Gewichtsteile Zinkoxid liegt. Wenn der Dotierungsstoff aus zweien oder mehreren der vorgenannten Metalloxide besteht, soll die Gesamtmenge dieser Oxide im Bereich von 0,005 bis 5,0 Gewichtsteilen, vorzugsweise im Bereich von 0,005 bis 2,0 Gewichtsteilen, liegen.

Die erzeugten homogenen Mischfällprodukte werden abfiltriert, dann zum möglichst weitgehenden Entfernen von verunreinigenden Ionen mit Wasser gewaschen und gewöhnlich bei einer Temperatur im Bereich von 80 bis 150 °C getrocknet. Wenn dann die getrock neten Fällprodukte in einer Wasserstoffgas enthaltenden, reduzierend wirkenden Atmosphäre bei einer Temperatur von nur 400 bis 550 °C, vorzugsweise 400 bis 500 °C, kalziniert werden, wird keine Herabsetzung des Weißgrades des kalzinierten Produkts beobachtet und kann das kalzinierte Produkt in hoher Ausbeute erhalten werden. Trotz seiner Erzeugung durch Kalzinieren bei niedriger Temperatur hat das kalzinierte Produkt einen für die Praxis genügend niedrigen elektrischen Widerstand in einer Größenordnung von $10^{-1}$ bis $10^2$ Ohm.cm.

Die im Rahmen der Erfindung verwendbaren, wasserlöslichen Zinkverbindungen sind nicht auf bestimmte Verbindungen eingeschränkt, sofern sie durch Kalzinieren in Zinkoxid umgewandelt werden können. Bevorzugte Beispiele dieser Verbindungen sind das Zinksulfat, Zinkchlorid, Zinknitrat, Zinkacetat oder Gemische derselben, weil sie im Handel leicht erhältlich sind.

Auch die als Dotierungsstoff dienenden wasserlöslichen Metallverbindungen sind nicht auf bestimmte Verbindungen eingeschränkt, sofern sie durch Kalzinieren in Zinnoxid, Galliumoxid, Indiumoxid oder Aluminiumoxid umgewandelt werden können. In der Praxis wird gewöhnlich mindestens eines der Chloride, Nitrate, Sulfate oder Acetate mindestens eines der in den vorgenannten Oxiden enthaltenen Metalle verwendet sowie mindestens ein Alkalimetallsalz von Oxosäuren dieser Metalle, z. B. der Zinnsäure, Galliumsäure, Indiumsäure und Aluminiumsäure.

Diese Dotierungsstoffe haben brauchbare Wirkungen, selbst wenn sie einzeln verwendet werden. Noch bessere Wirkungen können jedoch durch die kombinierte Zugabe von mindestens zweien dieser Substanzen erzielt werden. Beispiele dieser Kombinationen, als Oxide ausgedrückt, sind Zinnoxid/Galliumoxid, Zinnoxid/Indiumoxid oder Aluminiumoxid/Galliumoxid.

Die wäßrige Lösung, die sowohl Zinkionen als auch Metallionen des Dotierungsstoffes enthält, wird gewöhnlich auf einen pH-Wert von bis zu 1,0 eingestellt, damit eine Hydrolyse vor der Umsetzung mit

4

einem Alkali vermieden wird. Die Konzentration der Metallionen in den Lösungen ist nicht auf einen bestimmten Wert eingeschränkt, sofern sie deren Löslichkeit nicht übersteigt. In der Praxis liegt in einem System, das Zinkionen und Ionen des Metalls des Dotierungsstoffes enthält, die Konzentration der Metallionen vorzugsweise im Bereich von 200 bis 500 g/l.

Zu den Alkalimetallhydroxiden oder Alkalimetallcarbonaten, die in der wäßrigen Alkalilösung enthalten sind, das für die Neutralisierungsreaktion verwendet wird, gehören beispielsweise Natriumhydroxid (Ätznatron), Kaliumhydroxid (Ätzkali), Ammoniumhydroxid (Ammoniak), Natriumcarbonat (kalzinierte Soda), Natriumhydrogencarbonat (Natriumbicarbonat) und Ammoniumcarbonat. Diese Verbindungen können allein oder in Kombination verwendet werden und werden gewöhnlich in Form einer wäßrigen Lösung verwendet.

Das Wesen der Erfindung besteht in der Kombination der beiden nachstehenden Anforderungen:

Anforderung 1:

Die Neutralisierungsreaktion wird so durchgeführt, daß das Neutralisierungssystem auf einem pH-Wert im Bereich von 6 bis 12,5, vorzugsweise 7 bis 10, gehalten wird.

Anforderung 2:

Die eine wasserlösliche Zinkverbindung und eine wasserlösliche Metallverbindung enthaltende Lösung und eine Alkalilösung werden gleichzeitig einem Neutralisierungsreaktionssystem zugeführt.

Die Anforderung 1 hat folgende Bedeutung:

Bei einem pH-Wert unter 6 wird keine genügende Hydrolyse der wasserlöslichen Zinkverbindung erzielt, so daß das Endprodukt in einer niedrigeren Ausbeute erhalten wird und die Reaktion infolge der Bildung von basischen Salzen als Nebenprodukten zu stark verunreinigten und daher minderwertigen Produkten führt.

Andererseits hat bei einem pH-Wert über 12,5 das erhaltene Produkt keine genügende elektrische Leitfähigkeit, sondern liegt diese Leitfähigkeit unter einem vorgegebenen Wert, weil in diesem Fall keine genügende Hydrolyse des Dotierungsstoffes erzielt wird.

Bei einer Einstellung auf einen pH-Wert in dem vorgenannten Bereich kann eine Bildung von basischen Salzen vollständig verhindert werden oder werden sie nur in Spuren gebildet. Infolgedessen können die Fällprodukte fast vollständig in Zinkoxid umgewandelt werden, selbst wenn die Fällprodukte bei einer relativ niedrigen Temperatur zwischen der Zimmertemperatur und 150 °C getrocknet werden. Dagegen können in den üblichen Verfahren die Fällprodukte nicht in genügendem Maße in Zinkoxid umgewandelt werden, wenn sie bei einer so niedrigen Temperatur getrocknet werden. Man hat versucht, dieses Problem dadurch zu lösen, daß vor dem in einer reduzierend wirkenden Atmosphäre durchgeführten Kalzinieren ein Vorerhitzen auf 400 bis 700 °C an der Luft durchgeführt wurde. Beim Kalzinieren in einer reduzierend wirkenden Atmosphäre fällt jedoch Wasserdampf in beträchtlicher Menge an, so daß in diesen üblichen Verfahren viel Wasserstoff verbraucht wird.

· Die Anforderung 2 hat folgende Bedeutung:

Wenn beide Lösungen dem Neutralisierungsreaktionssystem gleichzeitig zugeführt werden, kann eine selektive Hydrolyse des Dotierungsstoffes verhindert werden.

Eine Bildung von Mischfällprodukten mit einer homogenen Zusammensetzungsverteilung kann dadurch gewährleistet werden, daß wasserunlösliche oder kaum wasserlösliche Verbindungen des Zinks und des in dem Dotierungsstoff enthaltenen Metalls gleichzeitig, homogen und kontinuierlich mischgefällt werden. (Diese Tatsache wurde durch Auswertung von Röntgenbeugungsbildern bestätigt.)

Die Kombination dieser beiden Anforderungen hat folgende Bedeutung:

Durch zusätzliche Versuche haben die Erfinder festgestellt, daß in dem Verfahren gemäß der JP-OS Sho 61-86421, das für die vorliegende Erfindung kaum als Stand der Technik angesehen werden kann, kein elektrisch leitendes, weißes Pulver, sondern ein graues Pulver erhalten wird. In der genannten Offenlegungsschrift wird weder die gleichzeitige Zuführung einer wäßrigen Lösung einer Zinkverbindung und eines Dotierungsstoffes und einer wäßrigen Alkalilösung noch die Tatsache angegeben, daß während der Reaktion der pH-Wert des Neutralisierungsreaktionssystems im Bereich von 6 bis 12,5 gehalten wird. Ferner wird das erhaltene Fällprodukt bei einer erhöhten Temperatur in der Größenordnung von 400 bis 500 °C getrocknet, die fast der Kalziniertemperatur entspricht, und wird das Kalzinieren in einer reduzierend wirkenden Atmosphäre bei einer Temperatur von 700 °C durchgeführt, d. h. bei einer Temperatur, die beträchtlich über der Obergrenze der erfindungsgemäßen Kalziniertemperatur liegt. Den Erfindern ist es

5

erstmalig gelungen, ein Verfahren zu entwickeln, das zu einem kalzinierten Produkt führt, das eine in der Praxis brauchbare elektrische Leitfähigkeit und dank einer Verhinderung des Dunkelwerdens einen höheren Weißgrad besitzt, selbst wenn das Kalzinieren bei einer Temperatur von nur 400 bis 500 °C durchgeführt wird.

Die Mischfällprodukte, die durch eine den Anforderungen 1 und 2 genügende Neutralisierungsreaktion gebildet worden sind, werden in bekannter Weise abfiltriert und danach mit Wasser gewaschen, bis das Filtrat eine elektrische Leitfähigkeit von höchstens 300 $\mu$S/cm hat. Danach werden die Fällprodukte bei einer Temperatur getrocknet, die im Bereich von der Zimmertemperatur bis 150 °C liegt, und werden sie dann ohne vorhergehendes Pulverisieren in einer Wasserstoffgas enthaltenden, reduzierend wirkenden Atmosphäre bei 400 bis 550 °C, vorzugsweise 400 bis 500 °C, kalziniert.

Das durch Kalzinieren in einer reduzierend wirkenden Atmosphäre erhaltene Produkt ist sehr brüchig und kann daher leicht in ein feines Pulver umgewandelt werden. Da gemäß der Erfindung das Kalzinieren bei einer sehr niedrigen Temperatur von nur 400 bis 550 °C erfolgt, bewirkt die Reduktion nur eine sehr geringe Verflüchtigung von Zinkoxid, so daß das elektrisch leitende Zinkweiß in hoher Ausbeute erhalten werden kann.

nach dem erfindungsgemäßen Verfahren erhaltene, elektrisch leitende Zinkweiß hat gewöhnlich einen spezifischen elektrischen Volumenwiderstand im Bereich von $10^{-1}$ bis $10^2$ Ohm.cm, der sehr stabil ist und sich im Lauf der Zeit kaum verändert. In den meisten Fällen besteht das erhaltene Pulver aus annähernd kugeligen Körnern mit einer durchschnittlichen Korngröße von etwa 0,05 bis 0,5 $\mu$m.

## Beispiel 1

11,17 kg 96 % reines Zinkchlorid, 71,76 g 98 % reines Zinn(IV)chlorid, dessen Menge einer auf Zinkoxid bezogenen Menge von 0,593 Gew.-% $SnO_2$ entspricht, und 64,72 g 99,9 % reines Galliumchlorid, dessen Menge einer auf Zinkoxid bezogenen Menge von 0,545 Gew.-% $Ga_2O_3$ entspricht, wurden in 400 ml 36%iger Salzsäure und soviel Wasser aufgelöst, daß 15 l einer Lösung A erhalten wurden. Die Lösung A und eine Lösung von 240 g/l NaOH wurden während 180 Minuten gleichzeitig einem Reaktionssystem zugeführt, wobei die Reaktionslösung auf einem pH-Wert von 10 und einer Reaktionstemperatur von 60 ° gehalten wurde. Die dabei gebildeten Mischfällprodukte wurden in der üblichen Weise abfiltriert und dann mit Wasser gewaschen, bis die elektrische Leitfähigkeit des Filtrats nur noch höchstens 300 $\mu$S/cm betrug. Dann wurden sie an der Luft bei 105 °C getrocknet. Das so erhaltene Produkt in Form von etwa 2 bis 30 mm großen Klumpen wurde als solches in einer Wasserstoffgasatmosphäre 60 Minuten lang bei 500 °C kalziniert, wobei 6,3 kg elektrisch leitendes Zinkweißpulver erhalten wurden, das einen spezifischen elektrischen Widerstand von 1,8 . $10^0$ Ohm.cm hatte.

Aus der Tatsache, daß der Gewichtsverlust beim Kalzinieren nur 2 % betrug, geht hervor, daß die Fällprodukte beim Trocknen fast vollständig in Zinkoxid umgewandelt worden waren.

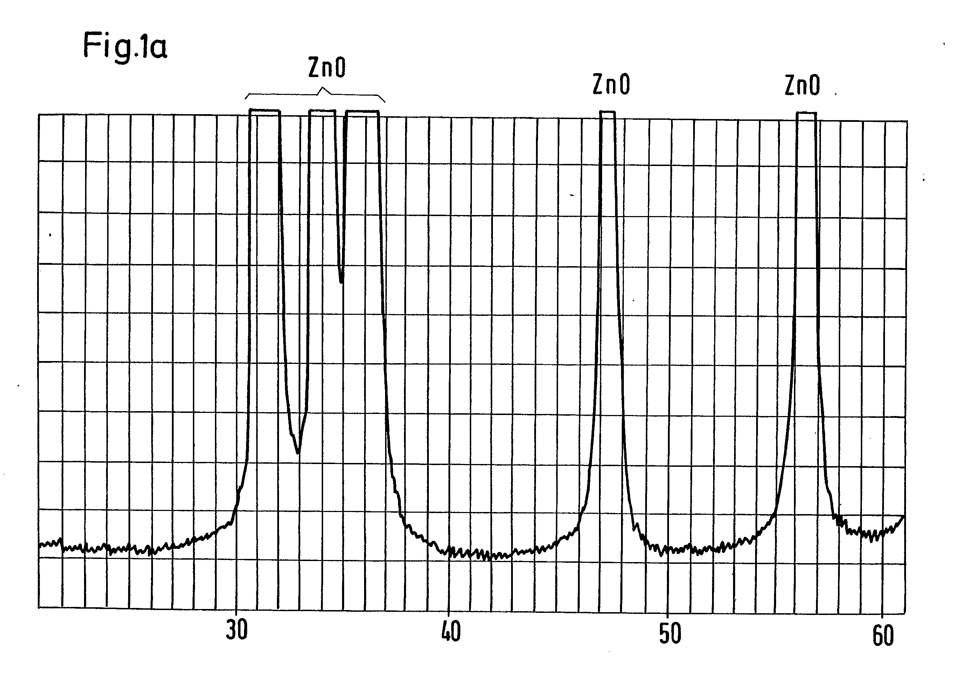

Die Homogenität der Zusammensetzungsverteilung der vorgenannten getrockneten Klumpen wurde vor dem Kalzinieren durch Röntgenbeugungsmessung bestätigt. Die dabei erzielten Ergebnisse sind in der Figur 1(a) dargestellt.

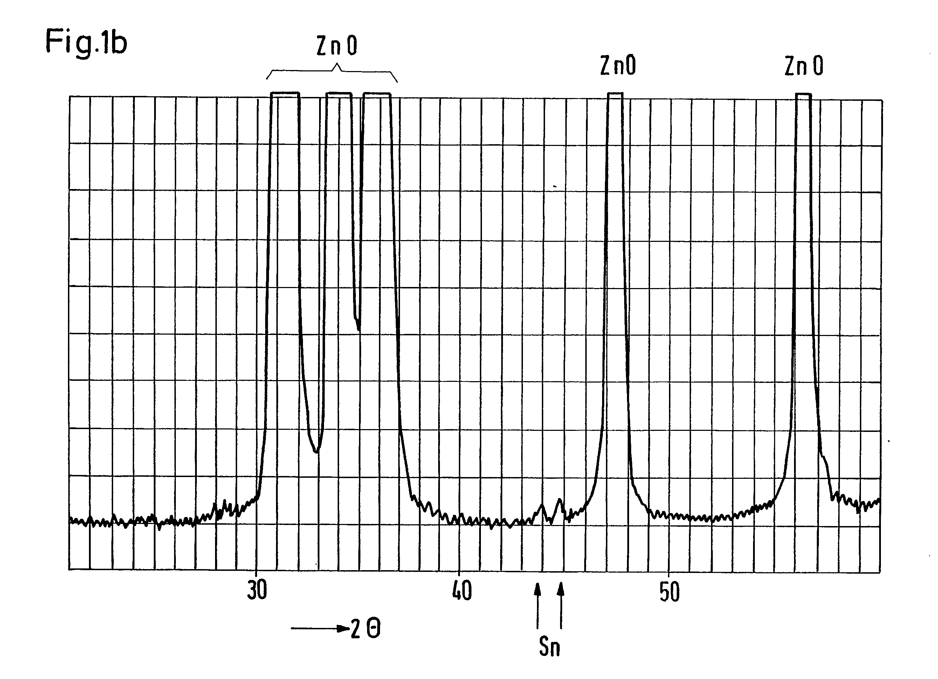

In der im Beispiel 1 beschriebenen Weise wurde die Lösung A chargenweise mit der Lösung B neutralisiert, bis die Lösung den pH-Wert 10 hatte. Die Ergebnisse sind zum Vergleich in der Figur 1(b) dargestellt. Ergebnisse:

In der Figur 1(a) ist nur die Beugungskurve des Zinkoxids, aber keine Beugungskurve erkennbar, die auf das gegebenenfalls ebenfalls vorhandene Zinnoxid oder Galliumoxid zurückzuführen wäre.

Dagegen sind in der Figur 1(b) zwischen den Beugungskurven des Zinkoxids (im Bereich von $2\theta$ = 43,8 ° und 44,8 °) durch metallisches Zinn bedingte Beugungskurven erkennbar.

Die Ergebnisse sind in der Tabelle I zusammengestellt.

## Diskussion

Man kann schließen, daß in der Figur 1(a) keine durch Zinnoxid oder Galliumoxid bedingten Beugungskurven erkennbar sind, weil das Zinnoxid oder Galliumoxid in dem ganzen Zinkoxidgitter homogen verteilt ist.

Ferner kann man schließen, daß die in der Figur 1(b) erkennbaren Beugungskurven darauf zurückzuführen sind, daß ein Teil des auf der Oberfläche des Zinkoxids abgeschiedenen Zinnoxids zu metallischem Zinn reduziert worden ist. Diese Erklärung wird auch dadurch gestützt, daß das erhaltene Produkt dunkelgrau ist.

Der Gehalt des kalzinierten Produkts an Chloratomen war mit 0,01 % sehr niedrig. Dann wurde zur Bewertung der Lagerbeständigkeit des elektrisch leitenden Zinkoxidpulvers die zeitabhängige Veränderung des spezifischen elektrischen Widerstandes dieses Pulvers an der Luft bestimmt. Aus den dabei erhaltenen Ergebnissen geht hervor, daß das Zinkoxidpulver sehr stabil ist (siehe auch Tabelle I).

| Tage vom Beginn an | 10 | 30 | 120 |
|---|---|---|---|
| Spezifischer elektrischer Widerstand des Pulvers (Ohm.cm) | $5,4.10^0$ | $5,2.10^0$ | $4,3.10^0$ |

Beispiel 2

Die Arbeitsweise des Beispiels 1 wurde wiederholt, wobei jedoch die Neutralisierung so durchgeführt wurde, daß der pH-Wert der flüssigen Phase des Reaktionssystems auf 12 gehalten wurde. Es wurden 6,25 kg elektrisch leitendes Zinkweißpulver erhalten, das einen spezifischen elektrischen Widerstand von $4,0.10^0$ Ohm.cm hatte. Die Ergebnisse sind in der nachstehenden Tabelle I zusammengestellt.

Beispiel 3

In derselben Arbeitsweise wie im Beispiel 1 wurden verschiedene elektrisch leitende Zinkweißpulver hergestellt, wobei jedoch die Arten der wasserlöslichen Zinkverbindungen, die Arten und Mengen der Dotierungsstoffe, die Arten der Alkalien, die pH-Werte der Reaktionssysteme und die angewendete Kalziniertemperatur unterschiedlich abgeändert wurden. Die Bedingungen und Ergebnisse sind in der nachstehenden Tabelle I zusammengestellt.

Vergleichsbeispiel 1 (Zugabe des Alkalis in einer Charge)

52,34 g 96 % reines Zinkchlorid, 0,95 g 98 % reines Zinnchlorid und 0,47 g 95 % reines Aluminiumchlorid wurden in 1,2 l Wasser gelöst. Der Lösung wurden 37,80 g 99,7 % reines Natriumcarbonat in einer Charge zugesetzt, wobei das System genügend gerührt wurde, um eine Neutralisierungsreaktion herbeizuführen. Mischfällprodukte aus Aluminium und Zinn enthaltendem, basischem Zinkcarbonat wurden in einen dicht verschlossenen Behälter eingebracht. Zum Einstellen der Trübe auf eine Konzentration von 300 g/l wurde der Inhalt des Behälters 5 Stunden lang bei 80 °C wärmebehandelt. Dann wurden die gebildeten Fällprodukte abfiltriert, gewaschen und getrocknet. Die getrockneten Mischfällprodukte wurden in einer Wasserstoffgasatmosphäre 3 Stunden lang bei 700 °C kalziniert. Dabei wurde in einer Ausbeute von 55,7 % ein dunkelgraues, elektrisch leitendes Zinkoxidpulver erhalten, dessen spezifischer elektrischer Widerstand $4,2.10^1$ Ohm.cm betrug.

Die Ergebnisse sind in der nachstehenden Tabelle II zusammengestellt.

Vergleichsbeispiel 2

52,34 g 96 % reines Zinkchlorid, 0,96 g 98 % reines Zinn(IV)chlorid und 0,48 g 95 % reines Aluminiumchlorid wurden in 1,26 l Wasser gelöst. Der Lösung wurden in einer Charge 195 cm³ einer wäßrigen Lösung zugesetzt, die 0,217 g 99,9 % reines Galliumchlorid, 0,91 g Natriumhydroxid und 37,42 g 99,7 % reines Natriumcarbonat enthielt, wobei das System genügend gerührt wurde, um eine Neutralisierungsreaktion herbeizuführen. Die gebildeten Mischfällprodukte wurden abfiltriert, mit 3 l warmem Wasser gewaschen und dann in einen dicht verschlossenen Behälter eingebracht, dessen Inhalt zum Einstellen der Trübe auf eine Konzentration von 300 g/l 5 Stunden bei 80 °C wärmebehandelt wurde. Dann wurden die Mischfällprodukte abfiltriert, gewaschen und 3 Stunden bei 500 °C getrocknet. Die getrockneten Mischfällprodukte wurden in einer Wasserstoffgasatmosphäre 3 Stunden lang bei 700 °C kalziniert. Dabei wurde in einer Ausbeute von 58,6 % ein dunkelgraues, elektrisch leitendes Zinkoxidpulver erhalten, dessen spezifischer elektrischer Widerstand $1,1.10^1$ Ohm.cm betrug.

Die Ergebnisse sind in der nachstehenden Tabelle II zusammengestellt.

Vergleichsbeispiel 3

52,34 g 96 % reines Zinkchlorid und 4,20 g 95 % reines Aluminiumchlorid wurden in 296 g Wasser gelöst. Zu der erhaltenen Lösung wurden allmählich 166 ml einer 14%gen wäßrigen Ammoniaklösung zugesetzt, wobei die Lösung bei Zimmertemperatur gerührt wurde. Dadurch wurde der pH-Wert der flüssigen Phase auf 8,2 erhöht. Nach der vollständigen Zugabe wurde das Reaktionssystem noch einige Minuten lang weitergerührt. Dann wurden die gebildeten Mischfällprodukte abfiltriert, gewaschen und 15 Stunden bei 100 °C getrocknet. Nachdem die Fällprodukte eine Stunde an der Luft bei 450 ° vorerhitzt worden waren, wurden die festen Fällprodukte pulverisiert. Das pulverisierte Produkt wurde in einer Stickstoffgasatmosphäre eine Stunde bei 800 °C kalziniert. Dabei wurde in einer Ausbeute von 80 % ein vorwiegend aus Zinkoxid bestehendes, weißes Pulver erhalten, dessen spezifischer elektrischer Widerstand mindestens $10^8$ Ohm.cm betrug.

Die Ergebnisse sind in der nachstehenden Tabelle II zusammengestellt.

Vergleichsbeispiel 4

Bedeutung der unteren Grenze des pH-Wertes)

In derselben Arbeitsweise wie im Beispiel 1 wurde ein elektrisch leitendes Zinkpulver erzeugt, wobei jedoch der pH-Wert des Reaktionssystems während der Neutralisierungsreaktion auf 5 gehalten wurde. Das erhaltene Pulver hatte einen spezifischen elektrischen Widerstand von $6,7.\,10^4$ Ohm.cm und enthielt 5,5% Chlor. Die Ausbeute betrug 76%.

Die Ergebnisse sind in der nachstehenden Tabelle II angegeben.

Vergleichsbeispiel 5

In derselben Arbeitsweise wie im Beispiel 1 wurde ein elektrisch leitendes Zinkoxidpulver erzeugt, wobei jedoch in einer reduzierend wirkenden Atmosphäre bei 600 bzw. 700 °C kalziniert wurde. Infolge der durch die Reduktion bewirkten Verflüchtigung von Zinkoxid wurde dieses in beiden Fällen in einer Ausbeute unter 80 % erhalten.

| Beispiel Nr. | Kalziniertemp. (°C) | Spez. elektr. Widerst. des Pulvers (Ohm.cm) | Ausbeute (%) | Farbe des Produkts |
|---|---|---|---|---|
| 5-1 | 600 | $1,2.10^1$ | 73 | dunkelgrau |
| 5-2 | 700 | $1,2.10^1$ | 60 | dunkelgrau |

Die Ergebnisse sind in der nachstehenden Tabelle II zusammengestellt.

Vergleichsbeispiel 6

In derselben Arbeitsweise wie im Beispiel 1 wurde ein elektrisch leitendes Zinkoxidpulver erzeugt, wobei jedoch zu einer Zinksalzlösung eine Alkalilösung in einer Charge oder allmählich (oder in aufeinanderfolgenden Teilmengen) zugesetzt wurde.

| Beispiel Nr. | Art der Zugabe | Spezif. elektr. Widerst. des Pulvers (Ohm.cm) | Anmerkung |
|---|---|---|---|
| 6-1 6-2 | Zugabe in einer Charge allmähliche Zugabe | $2,0.10^3$ $1,4.10^3$ | Cl-Geh. 2,5 % |

Die Ergebnisse sind in der nachstehenden Tabelle II zusammengestellt.

4. Kurze Erläuterung der Zeichnungen

Die Figuren 1(a) und 1(b) sind Röntgenbeugungsbilder der im Beispiel 1 erhaltenen Produkte. In der Figur 1(a) ist kein durch die Dotierungsstoffe bedingtes Beugungsmaximum erkennbar. In der Figur 1(b) erkennt man das Beugungsmaximum, das durch das metallische Zinn bedingt ist, das von dem Dotierungsstoff herrührt.

Tabelle 1 (Beispiel)

| Bei-spiel Nr. | Zink-verb. | Alkali | Dotierungsstoff | | | | Reaktionssystem | | Trocken-temp. (°C) |
|---|---|---|---|---|---|---|---|---|---|
| | | | Kombination | | Zugabemenge % | % | Temp. (°C) | pH | |
| 1 | $ZnCl_2$ | NaOH | $SnO_2$ | $Ga_2O_3$ | 0,593 | 0,545 | 60 | 10 | 105 |
| 2 | " | " | " | " | " | " | " | 12 | " |
| 3- 1 | " | " | " | " | 0,500 | 0,400 | " | 7 | |
| 3- 2 | " | " | " | " | " | " | " | 8 | |
| 3- 3 | " | " | " | " | " | " | " | 9 | |
| 3- 4 | " | " | " | " | 0,005 | 0,005 | " | " | |
| 3- 5 | " | " | " | " | 0,010 | 0,010 | " | " | |
| 3- 6 | " | " | " | " | 0,020 | 0,020 | " | " | |
| 3- 7 | " | " | " | " | 0,200 | 0,050 | " | " | |
| 3- 8 | " | " | " | " | 0,500 | 0,400 | " | " | |
| 3- 9 | " | " | " | " | " | " | " | " | |
| 3-10 | " | " | " | " | 0,200 | 0,050 | " | " | |
| 3-11 | " | " | " | " | " | " | " | " | |
| 3-12 | | | " | " | " | " | " | " | |
| 3-13 | $ZnCl_2$ | $Na_2CO_3$ | " | " | 0,500 | 0,400 | " | 6 | |
| 3-14 | " | $NH_4OH$ | " | " | 0,200 | 0,050 | " | 6 | |
| 3-15 | $ZnSO_4$ | NaOH | " | " | " | " | " | 8 | |
| 3-16 | " | $Na_2CO_3$ | " | " | " | " | " | 6 | |
| 3-17 | " | $NH_4OH$ | " | " | " | " | " | 7 | |
| 3-18 | $ZnCl_2$ | NaOH | — | " | " | 0,200 | " | 7 | |
| 3-19 | " | " | — | " | " | 0,050 | " | " | |
| 3-20 | " | $Na_2CO_3$ | $Al_2O_3$ | " | 0,500 | 0,500 | " | 6,5 | |
| 3-21 | " | " | " | $In_2O_3$ | 1,000 | 0,300 | " | 6,5 | |

EP 0 404 087 A1

EP 0 404 087 A1

Tabelle 1 (Forts.)

| Bei-spiel Nr. | Kalzination | | | Produkt | | Farbe |
|---|---|---|---|---|---|---|
| | Temp. (°C) | Atmosphäre | Zeit min. | Ausbeute (%) | Spez. elektr. Widerst. (Ohm.cm) | |
| 1 | 500 | $H_2$ | 60 | 98 | $1,8.10^0$ | weiß |
| 2 | " | " | " | 97,5 | $4,0.10^0$ | " |
| 3- 1 | " | " | " | 99 | $1,2.10^0$ | " |
| 3- 2 | " | " | " | " | $5,0.10^0$ | " |
| 3- 3 | " | " | " | 98 | $7,3.10^0$ | " |
| 3- 4 | " | " | " | " | $5,1.10^0$ | " |
| 3- 5 | " | " | " | " | $2,8.10^0$ | " |
| 3- 6 | " | " | " | " | $4,2.10^0$ | " |
| 3- 7 | " | " | " | " | $2,1.10^0$ | " |
| 3- 8 | 400 | " | " | 99 | $7,4.10^{-1}$ | " |
| 3- 9 | 450 | " | " | " | $7,6.10^{-1}$ | " |
| 3-10 | 400 | " | " | " | $2,8.10^0$ | " |
| 3-11 | 450 | " | " | " | $1,5.10^0$ | " |
| 3-12 | 550 | " | " | 96 | $2,5.10^0$ | " |
| 3-13 | 500 | " | " | 96 | $4,7.10^1$ | " |
| 3-14 | " | " | " | 86 | $3,7.10^0$ | " |
| 3-15 | " | " | " | 98 | $3,2.10^1$ | " |
| 3-16 | " | " | " | 96 | $3,7.10^1$ | " |
| 3-17 | " | " | " | 88 | $8,7.10^1$ | " |
| 3-18 | " | " | " | 98 | $5,9.10^1$ | " |
| 3-19 | " | " | " | 98 | $7,5.10^1$ | " |
| 3-20 | " | " | " | 96,5 | $9,6.10^1$ | " |
| 3-21 | " | " | " | 96 | $7,1.10^1$ | " |

## Tabelle II (Vergleichsbeispiele)

| Vergleichsbeispiel Nr. | Zinkverb. | Alkali | Aktivator Kombination | | Zugabemenge | | Reaktionssystem Temp. ($^\circ$C) | pH | Trockentemp. ($^\circ$C) |
|---|---|---|---|---|---|---|---|---|---|
| 1 | $ZnCl_2$ | $Na_2CO_3$ | $SnO_2$ | $Al_2O_3$ | | | 80 | | |
| 2 | " | " | $SnO_2/Al_2O_3/Ga_2O_3$ | | | | " | | 500 |
| 3 | " | $NH_4OH$ | – | $Al_2O_3$ | | | 100 | 8,2 | 100 |
| 4 | " | NaOH | $SnO_2$ | $Ga_2O_3$ | 0,593 | 0,545 | 60 | 5 | 105 |
| 5-1 | " | " | " | " | " | " | " | 10 | " |
| 5-2 | " | " | " | " | 0,005 | " | " | 10 | " |
| 6-1 | " | " | " | " | 0,010 | " | " | | " |
| 6-2 | " | " | " | " | 0,020 | " | " | | " |

EP 0 404 087 A1

Tabelle II (Forts.)

| Vergleichs-beispiel Nr. | Kalzination | | | Produkt (Pulver) | | | Neutralisierungssystem |
|---|---|---|---|---|---|---|---|
| | Temp. ($^{o}$C) | Atmo-sphäre | Zeit (min) | Aus-beute % | Spez. elektr. Widerst. (Ohm.cm) | Farbe | Zugabe der Alkalilösung |
| 1 | 700 | $H_2$ | 180 | 55,7 | $4,2.10^1$ | dunkel-grau | Zugabe in einer Charge |
| 2 | " | " | " | 58,6 | $1,1.10^1$ | " | " |
| 3 | 450 – 800 | $N_2$ | 60 | 80 | $10^8$ | weiß | Allmähliche Zugabe der Alkalilösung |
| 4 | 500 | $H_2$ | 60 | 76 | $6,7.10^4$ | dunkel-grau | Gleichzeitige Zugabe |
| 5–1 | 600 | " | " | 73 | $1,2.10^1$ | " | " |
| 5–2 | 700 | " | " | 60 | $4,1.10^1$ | weiß | " |
| 6–1 | 500 | " | " | | $2,0.10^3$ | weiß | Zugabe in einer Charge |
| 6–2 | " | " | " | | $1,4.10^5$ | weiß | Allmähliche Zugabe der Alkalilösung |

EP 0 404 087 A1

**Ansprüche**

1. Verfahren zum Erzeugen von weißem, elektrisch leitfähigem Zinkoxid, in dem unter Bildung von Mischfällprodukten eine wäßrige Alkalilösung mit einer Lösung umgesetzt wird, die eine wasserlösliche Zinkverbindung und mindestens eine wasserlösliche Metallverbindung enthält, die aus der Gruppe ausgewählt ist, die aus den Zinn-, Gallium-, Indium- und Aluminiumverbindungen besteht, wobei die nach dem Kalzinieren der Mischfällprodukte bestimmte Menge mindestens eines der Glieder der Gruppe, die aus Zinnoxid, Galliumoxid, Indiumoxid und Aluminiumoxid besteht, im Bereich von 0,005 bis 5,0 Gewichtsteilen pro 100 Gewichtsteile Zinkoxid beträgt, und wobei diese beiden Lösungen gleichzeitig derart einer Reaktionszone zugeführt werden, daß die Reaktionslösung auf einem gewünschten pH-Wert im Bereich von 6 bis 12,5 gehalten wird, worauf die so erhaltenen Mischfällprodukte in einer reduzierend wirkenden Atmosphäre kalziniert werden.

2. Verfahren nach Anspruch 1, dadurch gekennzeichnet, daß die Klaziniertemperatur im Bereich von 400 bis 550 °C liegt.

3. Verfahren nach Anspruch 1, dadurch gekennzeichnet. daß die Kalziniertemperatur im Bereich von 400 bis 500 °C liegt.

Fig.1a

ZnO   ZnO   ZnO

EP 0 404 087 A1

Fig.1b

EP 0 404 087 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE DERWENT WORLD PATENT INDEX, AN=81-54333D, Derwent Publications Ltd, London, GB; & JP-A-56 069 266 (NIPPON KAGAKU SANGY) * Zusammenfassung * --- | 1 | H 01 B 1/08 C 01 G 9/02 |
| A | EP-A-0 272 964 (THOMSON-CSF) * Patentansprüche 1-16 * --- | 1,2 | |
| P,A | EP-A-0 354 769 (TOSOH) * Insgesamt * ----- | 1,2 | |
| | | | **RECHERCHIERTE SACHGEBIETE (Int. Cl.5)** |
| | | | H 01 B 1 C 01 G 9 |

Der vorliegende Recherchenbericht wurde für alle Patentansprüche erstellt

| Recherchenort | Abschlußdatum der Recherche | Prüfer |
|---|---|---|
| DEN HAAG | 12-09-1990 | DROUOT M.C. |

EPO FORM 1503 03.82 (P0403)